(19) Europäisches Patentamt
European Patent Office
Office européen des brevets

(11) Publication number: **0 350 026 B1**

(12) **EUROPEAN PATENT SPECIFICATION**

(45) Date of publication of patent specification: **12.10.94**

(51) Int. Cl.5: **C09B 23/10**, G03C 1/83

(21) Application number: **89112355.6**

(22) Date of filing: **06.07.89**

The file contains technical information submitted after the application was filed and not included in this specification

(54) **Infrared filter dye for photographic element.**

(30) Priority: **07.07.88 US 216672**

(43) Date of publication of application:
**10.01.90 Bulletin 90/02**

(45) Publication of the grant of the patent:
**12.10.94 Bulletin 94/41**

(84) Designated Contracting States:
**DE FR GB**

(56) References cited:

| | |
|---|---|
| **EP-A- 0 138 543** | **EP-A- 0 251 282** |
| **EP-A- 0 288 076** | **BE-A- 674 800** |
| **DE-A- 2 046 672** | **GB-A- 1 184 496** |
| **US-A- 3 758 461** | **US-A- 4 742 523** |

(73) Proprietor: **EASTMAN KODAK COMPANY**
**343 State Street**
**Rochester New York 14650-2201 (US)**

(72) Inventor: **Parton, Richard Lee c/o EASTMAN KODAK COMPANY**
**Patent Department**
**343 State Street**
**Rochester New York 14650 (US)**
Inventor: **Stegman, David Alan c/o EASTMAN KODAK COMPANY**
**Patent Department**
**343 State Street**
**Rochester New York 14650 (US)**
Inventor: **Jones, Ralph Walter, Jr. c/o EASTMAN KODAK COMPANY**
**Patent Department**
**343 State Street**
**Rochester New York 14650 (US)**

(74) Representative: **Brandes, Jürgen, Dr. rer. nat. et al**
**Wuesthoff & Wuesthoff**
**Patent- und Rechtsanwälte**
**Schweigerstrasse 2**
**D-81541 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

This invention relates in general to photography and specifically to photographic filter dyes that absorb infrared light and are useful as antihalation dyes in infrared-sensitive photographic elements.

Photographic elements often contain filter dyes for a variety of purposes. Filter dyes may be used as absorber dyes in photographic emulsion layers to improve image sharpness or adjust photographic speed. They may be used as antihalation dyes, for example, in a lower layer of an element to reduce halation in the image-forming layers. Filter dyes can also be used as general purpose filter dyes for absorbing light of a particular wavelength so that it does not expose or exposes at a reduced intensity a lower layer in the element.

Filter dyes may be present in essentially any layer of a photographic element where it is desired to absorb radiation in the region of the spectrum where the dye absorbs. For example, they may be contained in an interlayer, a radiation-sensitive layer, an overcoat layer, an undercoat layer, a backing layer, or others known in the art. Absorber dyes (also called intergrain absorber dyes) are generally present in the radiation-sensitive layers of photographic elements. Antihalation dyes may be located in undercoat layers on either side of a transparent support carrying radiation-sensitive layers. Such antihalation layers may also be positioned between two or more radiation-sensitive layers in a multilayer element or as a backing layer on the side of the support away from the light-sensitive layer.

Photographic elements are often used in conjunction with information-recording equipment that exposes the element with infrared radiation emitted from a semiconductor laser diode. For example, in the medical diagnostics field, digital information from equipment such as computer assisted tomography equipment is often presented for viewing on a laser-exposed photographic element. Such diodes generally emit electromagnetic radiation having a wavelength of from around 730 nm to around 900 nm. A common laser wavelength is around 800 nm. Other laser emission wavelengths are around 750 nm, 780 nm, 820 nm, and 870 nm. Photographic elements used in conjunction with such information-recording equipment often require filter dyes that absorb in this region, for example, as antihalation or absorber dyes.

In addition to absorbing light in the region of interest, a filter dye should leave little or no undesirable stain after the photographic element is processed, so as not to affect the image tone of the exposed and processed element. In many situations, for example in the medical diagnostics field, a cool (i.e., blue-hued) image tome is desired. Viewers often find such cool tones pleasing to the eye and conductive to the reading of stored image information. A cool tone is often imparted to photographic elements by incorporating a blue dye in the support or in a layer of the element; however, this dye usually does not perform any other useful function in the element and the cool tone imparted by this dye can be adversely effected by other retained staining dyes. It would thus be desirable if a filter dye could be used that not only provided the desired light filtration during exposure, but also provided a cool image tone to the processed element.

Tricarbocyanine dyes having, in the methylene chain, structures of the type:

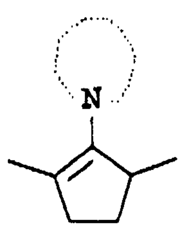

have been disclosed in EP 0 251 282, US 3 758 461, DE 2 046 672, and BE 674 800. In EP 0 251 282 the dyes are used as filter dyes in photographic elements along with a deaggregant in order to allow removal of the dyes during processing. In US 3 758 461, DE 2 046 672 and BE 674 800, the photographic elements described used the dyes solely as sensitizing dyes, which requires their adsorption to silver halide.

According to the present invention, there are provided photographic elements which utilize

Infrared filter dyes according to formula (I):

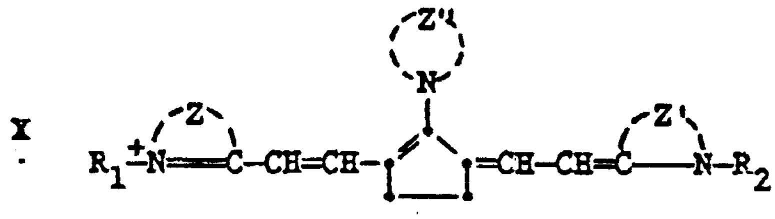

where

Z and Z' each independently represent the atoms necessary to complete a substituted or unsubstituted benzothiazole nucleus, benzoselenazole nucleus, indole nucleus, naphthothiazole nucleus, naphthoselenazole nucleus, or benzindole nucleus,

$R_1$ and $R_2$ each independently represents alkyl of from 1 to 8 carbon atoms or sulfoalkyl, carboxyalkyl, or sulfatoalkyl of from 2 to 6 carbon atoms,

with the proviso that when Z and Z' are sulfo-substituted benzindole nuclei, $R_1$ and $R_2$ have at least 3 linear carbon atoms between the heterocyclic nitrogen atom and the sulfo or sulfato group if they are sulfoalkyl or sulfatoalkyl, or at least 2 linear carbon atoms between the heterocyclic nitrogen atom and the carboxy group if $R_1$ and $R_2$ are carboxyalkyl,

Z" represents the atoms necessary to complete a substituted or unsubstituted piperidyl ring, a substituted or unsubstituted pyrrolydyl ring, and substituted or unsubstituted pyrazinyl ring, and

X represents a counterion.

wherein the layer comprising the dye is free of any compound that would deaggregate the dye, and the dye is not adsorbed to silver halide.

The filter dyes of formula (I) effectively absorb infrared radiation and also impart a desirable cool image tone to the exposed and processed element.

According to formula (I), Z and Z' each independently represent the atoms necessary to complete a substituted or unsubstituted benzothiazole nucleus, benzoselenazole nucleus, indole nucleus, naphthothiazole nucleus, naphthoselenazole nucleus, or benzindole nucleus. These heterocyclic nuclei may be substituted by any of a number of groups known to be substituents for such nuclei. These include sulfo, halogen (e.g., chloro, fluoro), alkyl of 1 to 4 carbon atoms (e.g., methyl, ethyl, propyl, butyl) which may themselves be substituted with known substituents such as sulfo or halogen, alkoxy of 1 to 4 carbon atoms (e.g., methoxy, ethoxy, propoxy, butoxy) which may be substituted, substituted or unsubstituted aryl (e.g., phenyl), carboxy, or carboxylate (e.g., methyl ester, ethyl ester).

$R_1$ and $R_2$ each independently represents alkyl of from 1 to 8 carbon atoms or sulfoalkyl, carboxyalkyl, or sulfatoalkyl of from 2 to 6 carbon atoms. When $R_1$ or $R_2$ are sulfatoalkyl or sulfoalkyl, they have at least 3 linear carbon atoms between the heterocyclic nitrogen atom and the sulfo or sulfato group if Z and Z′ are sulfo-substituted benzindole nuclei. When $R_1$ or $R_2$ are carboxyalkyl, they have at least 2 linear carbon atoms between the heterocyclic nitrogen atom and the carboxy group group if Z and Z′ are sulfo-substituted benzindole nuclei. Examples of alkyl groups useful as $R_1$ and $R_2$ include methyl, ethyl, propyl, isopropyl, butyl, and isobutyl. It is preferred that when $R_1$ or $R_2$ are alkyl, Z or Z′ or both be substituted with aqueous solubilizing groups such as sulfo, sulfoalkyl, carboxyalkyl such as carboxymethyl or carboxyethyl, or sulfato. Examples of sulfoalkyl, carboxyalkyl, and sulfatoalkyl useful as $R_1$ and $R_2$ include 3-sulfopropyl, 3-sulfobutyl, 3-sulfatopropyl, 3-carboxypropyl, 2-hydroxy-3-sulfopropyl, 4-sulfobutyl, 3-sulfopentyl, 4-sulfopentyl, and 5-sulfopentyl.

Z" represents the atoms necessary to complete a substituted or unsubstituted piperidyl ring, a substituted or unsubstituted pyrrolidyl ring, or a substituted or unsubstituted pyrazinyl ring. These ring structures may be substituted with known substituents such as alkyl such as alkyl of from 1 to 8 carbon atoms (e.g., methyl, ethyl, butyl), which may themselves be substituted with known substituents such as hydroxy, halogen, and the like (e.g., hydroxyethyl, chloroethyl), carboxylate of from 1 to 9 carbon atoms (e.g., methyl ester, ethyl ester), amido, sulfonamido, halogen (e.g., chloro, fluoro), and others that would be known to one skilled in the art.

In a preferred embodiment,

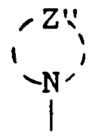

is represented by the formula:

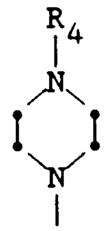

where $R_4$ is selected from the group consisting of

$-CO_2R_5$, 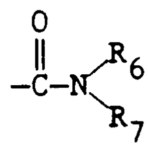, and 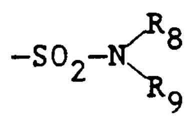,

where $R_5$, $R_6$, $R_7$, $R_8$, and $R_9$ are each independently substituted or unsubstituted alkyl of from 1 to 8 carbon atoms (e.g., methyl, ethyl, propyl, isopropyl, butyl, which may be substituted as known in the art with, for example, hydroxy, alkoxy, aryl, or halogen).

X represents a counterion as necessary to balance the charge of the dye molecule. The counterion may be ionically bound to the molecule or it may be part of the dye molecule itself to form an intramolecular salt. Such counterions are well-known in the art. Useful anionic counterions include chloride, bromide, iodide, p-toluene sulfonate, methane sulfonate, methyl sulfate, ethyl sulfate, perchlorate, and the like. Useful cationic counterions include sodium, potassium, triethylammonium, and the like.

Examples of dye compounds according to formula (I) include:

1.

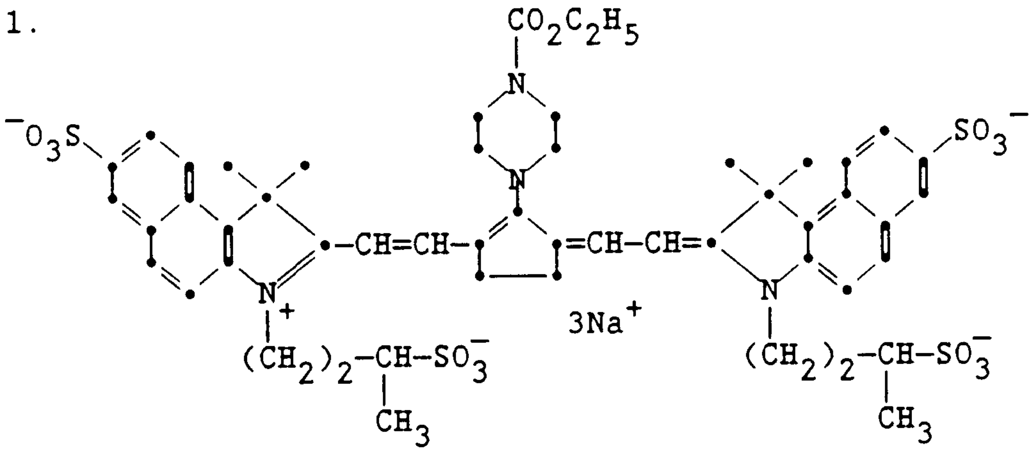

2.

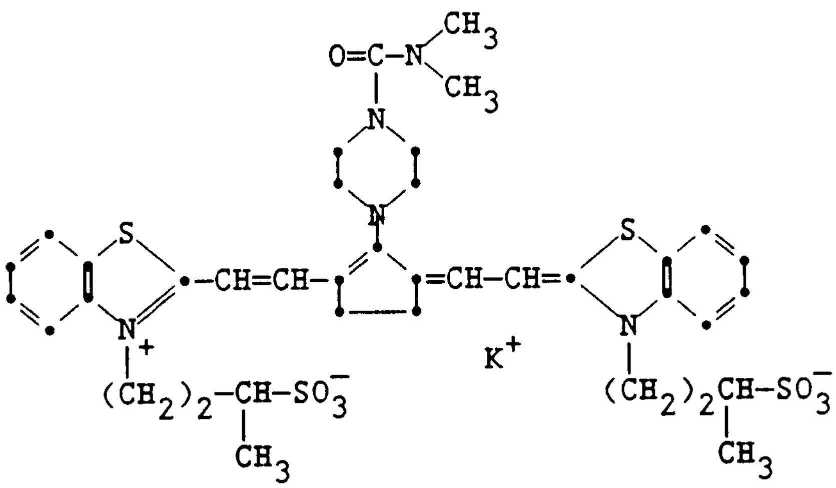

3.

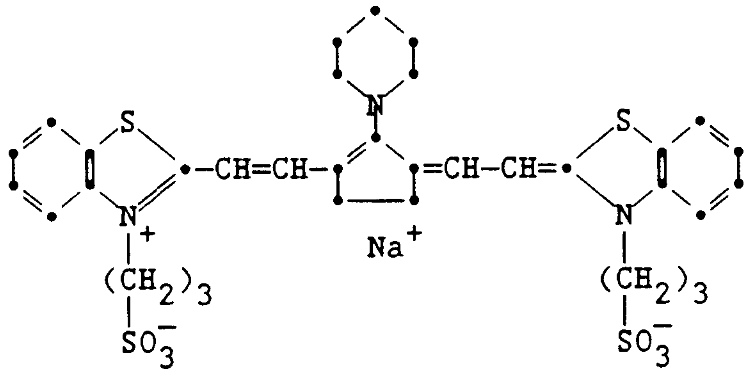

4.

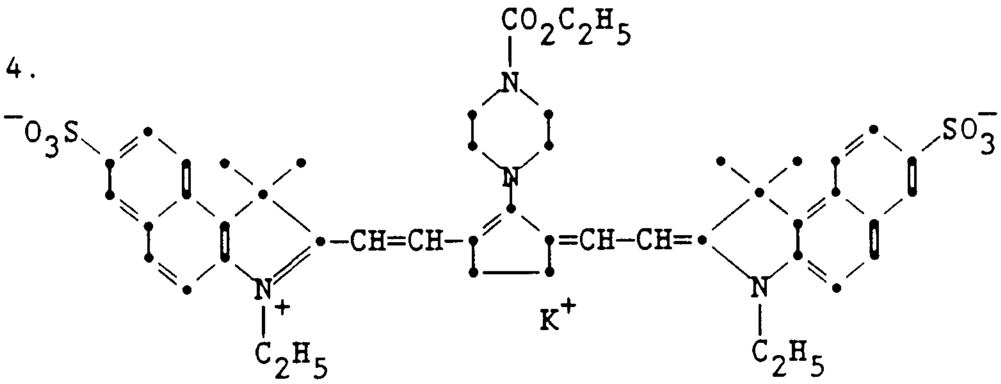

5.

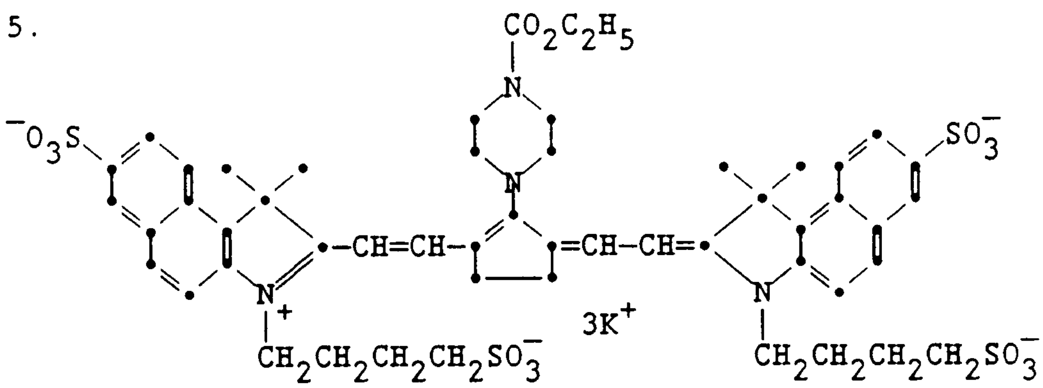

6.

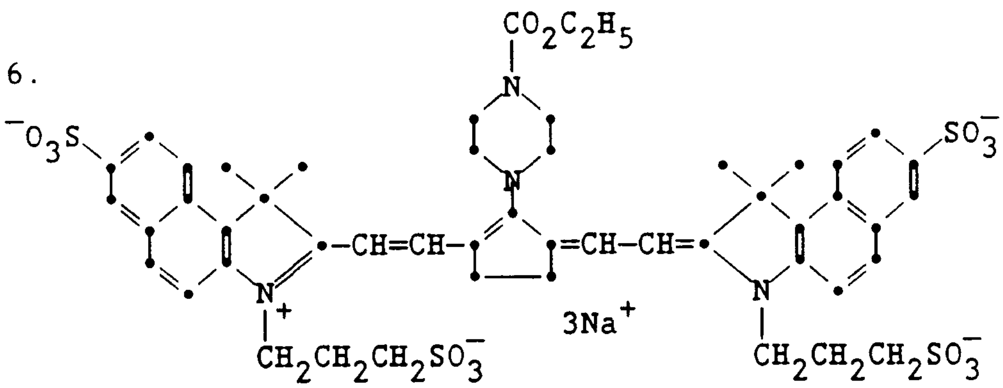

7.

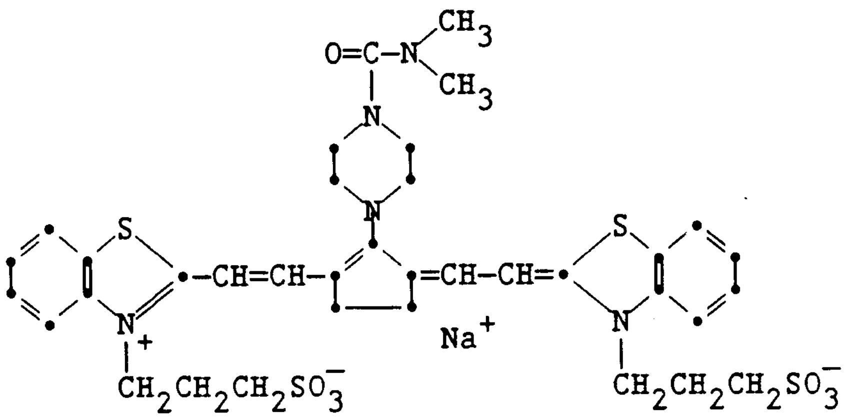

8.

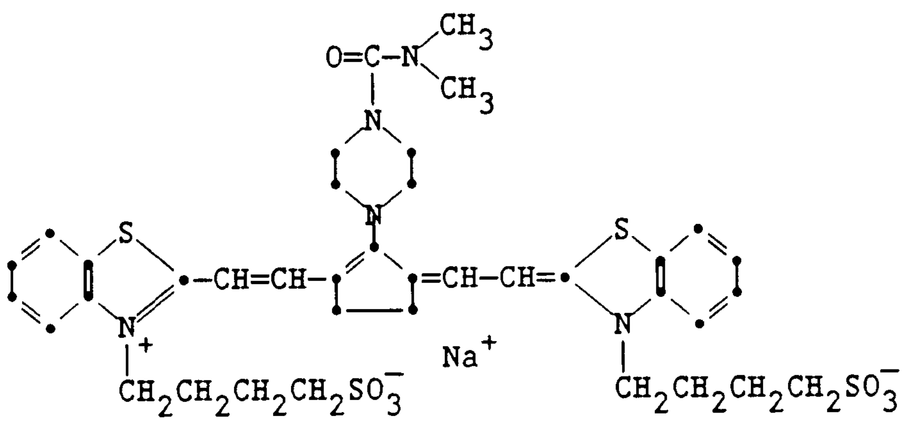

9.

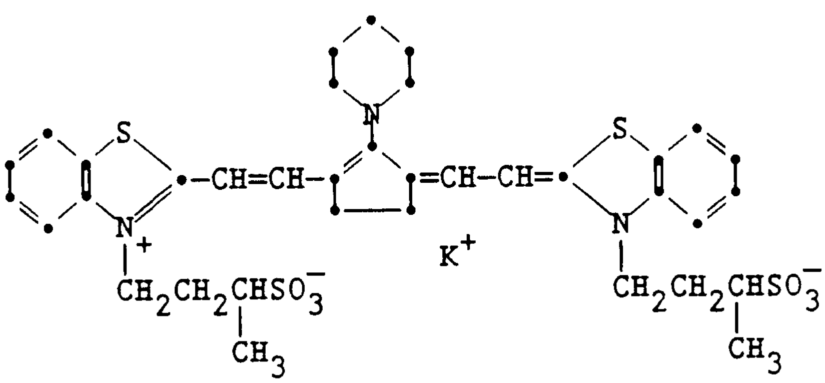

10.

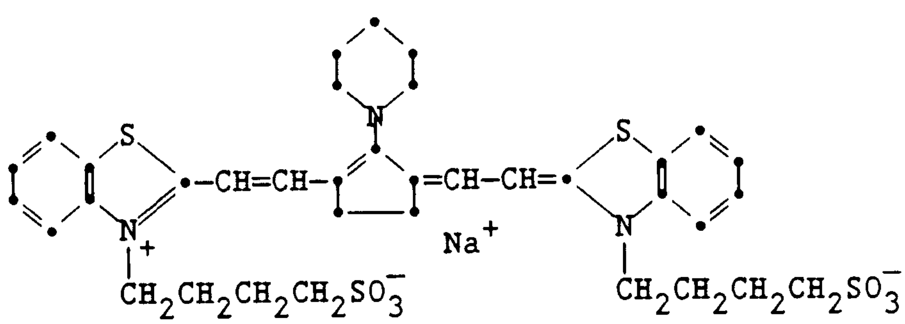

11. 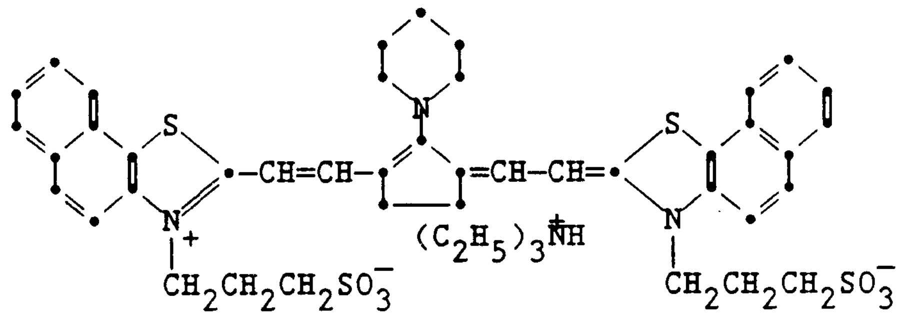

12. 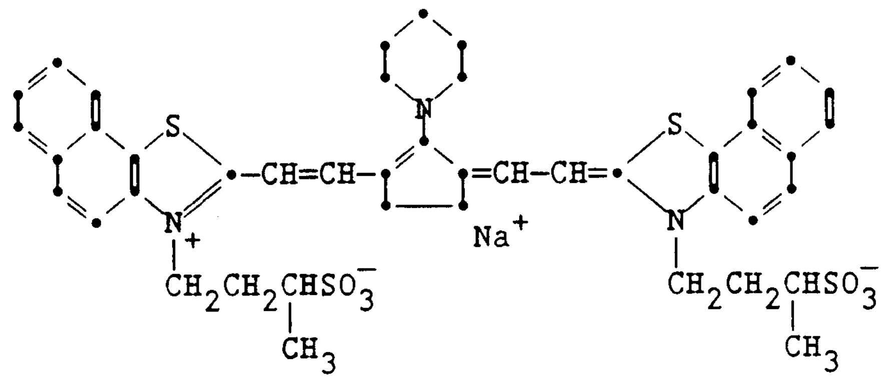

13. 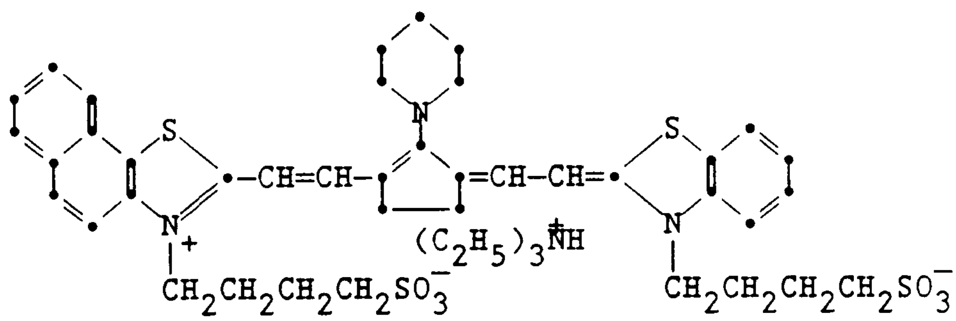

14. 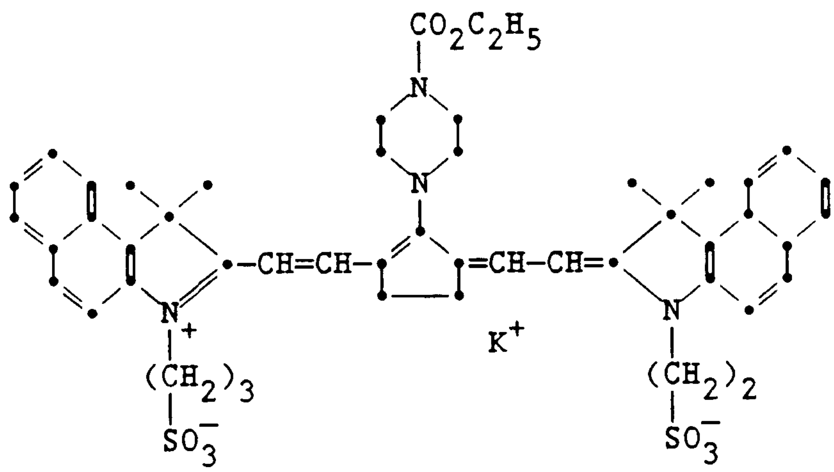

15.

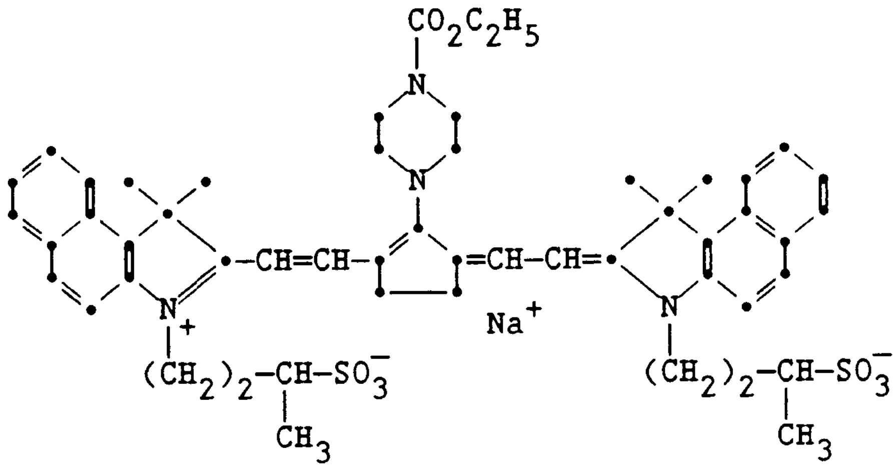

16.

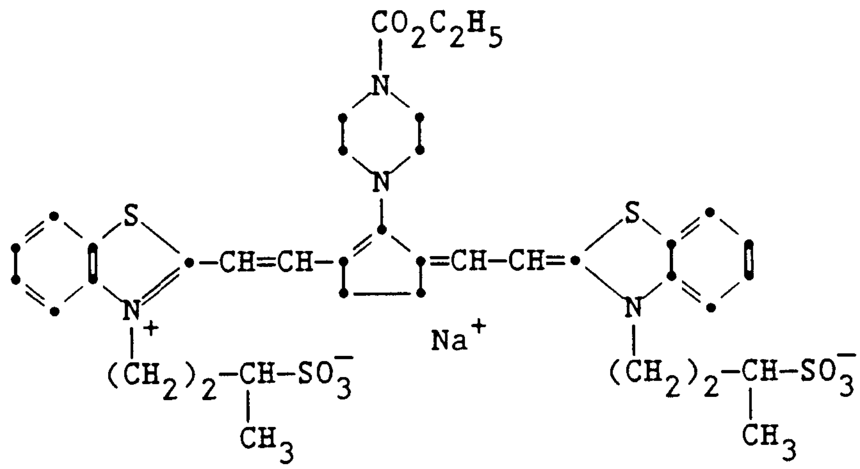

17.

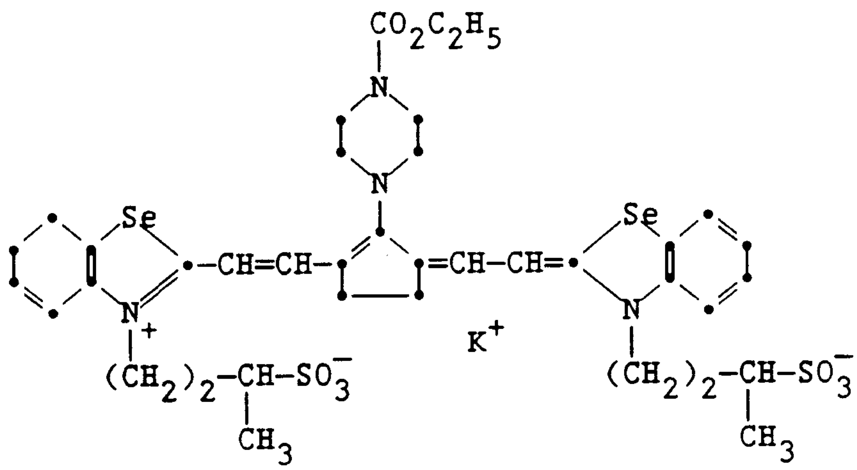

18.

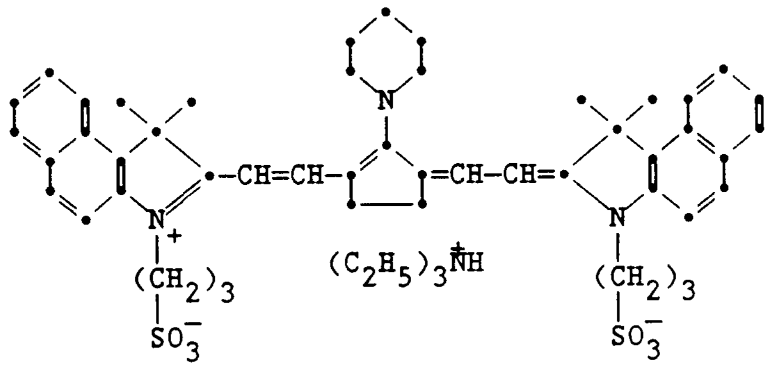

19.

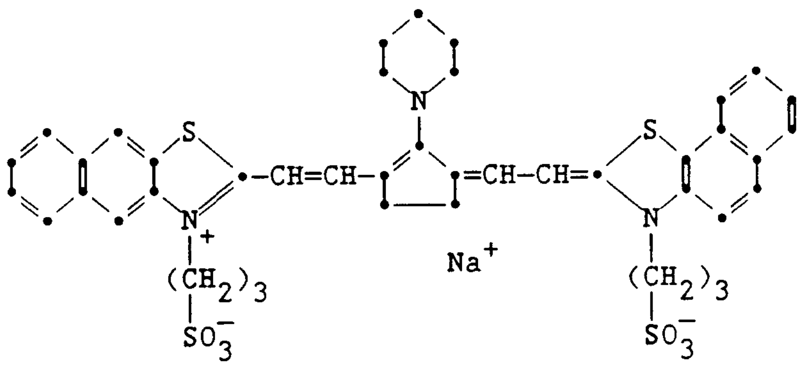

20.

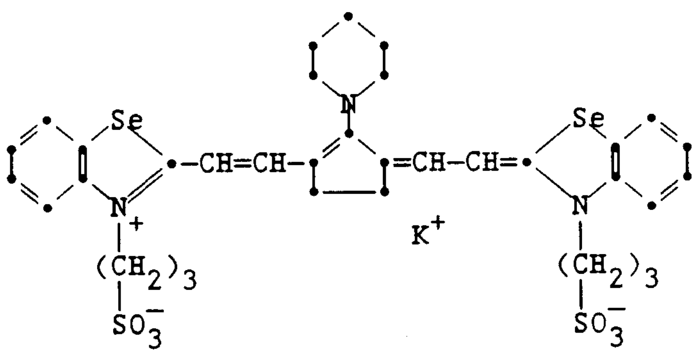

21.

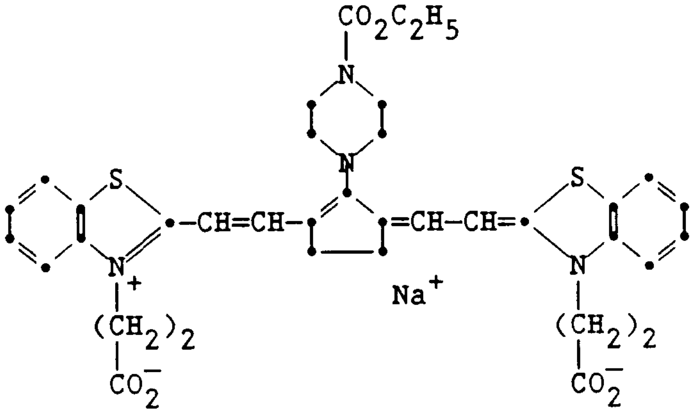

22.

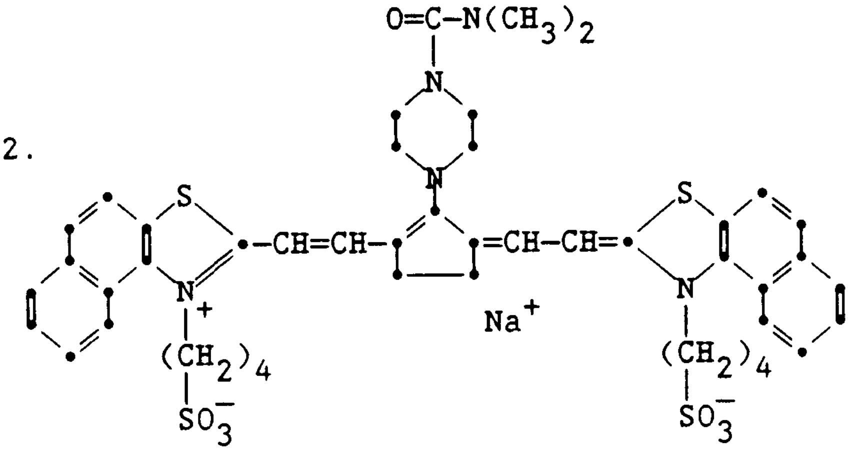

23.

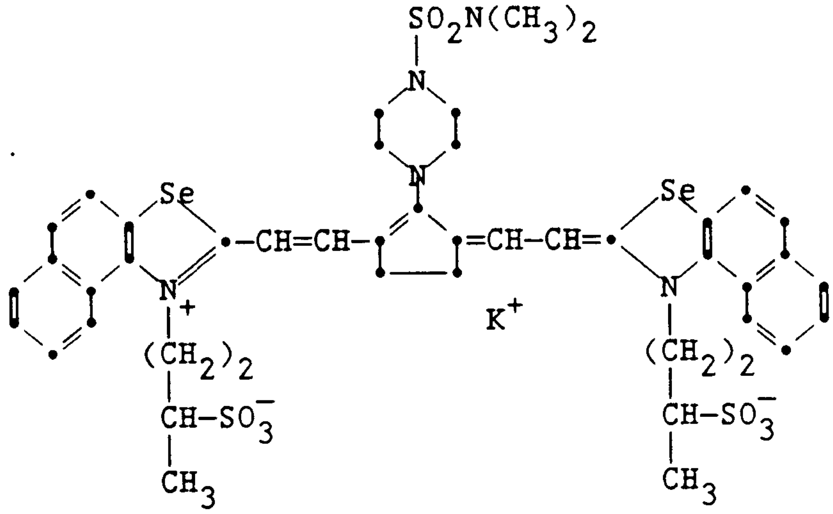

24.

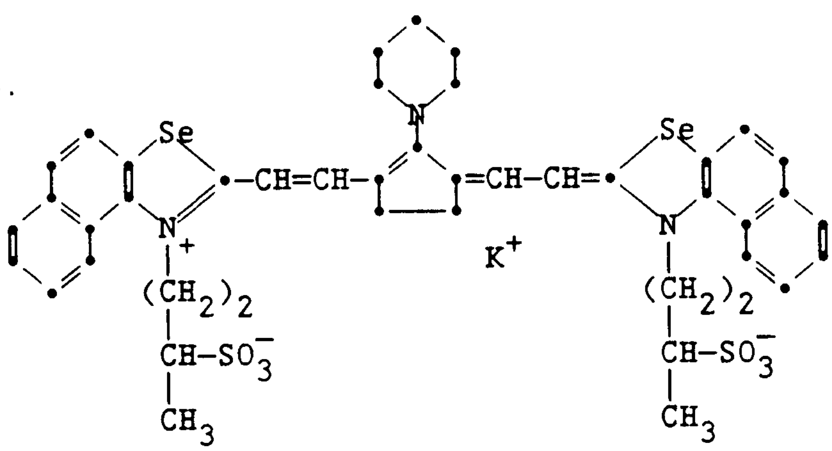

25.

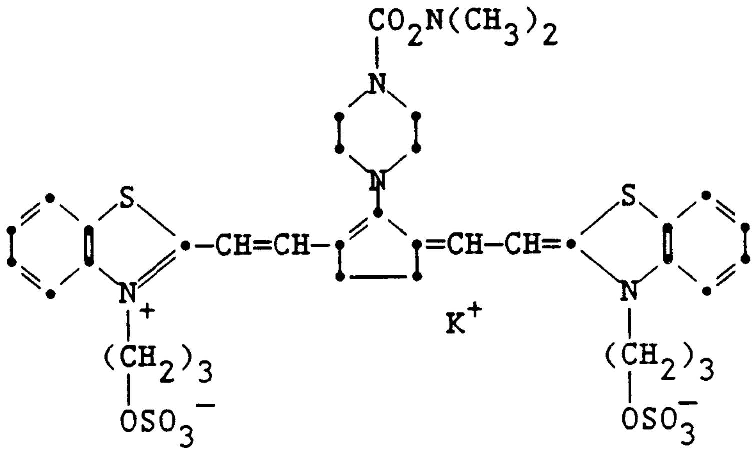

26.

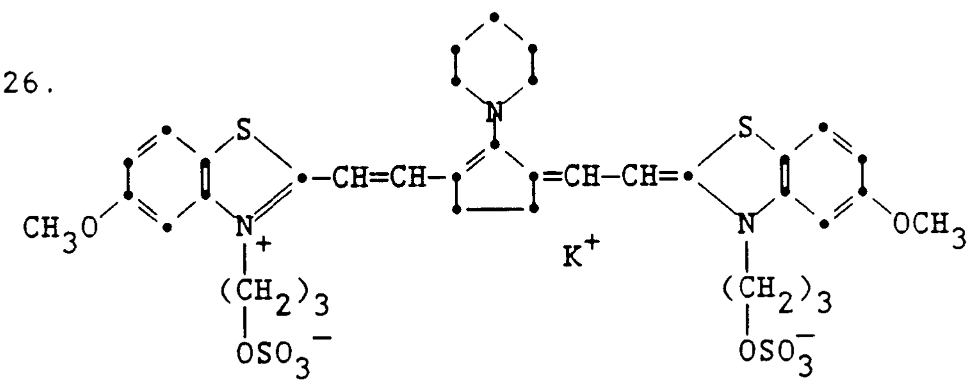

27.

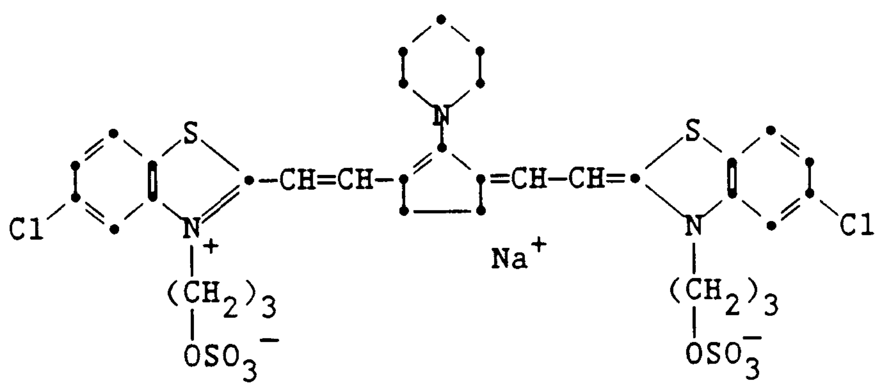

The dyes of formula (I) can be made according to well-known procedures in the art, such as those described in James, The Theory of the Photographic Process, 4th ed., 1977, MacMillan, New York and U.S. Patents 2,895,955, 3,148,187, and 3,423,207. A representative synthesis of a dye according to formula (I) is set forth below.

Preparation 1 Preparation of Dye 1

Step A - Preparation of 7-Sulfo-1,1,2-trimethyl-1H-benz[e]indole (Intermediate A)

1,1,2-Trimethyl-1H-benz[e]indole, 100 g. was added with stirring to 500 mL of concentrated $H_2SO_4$. The mixture was heated at 180 °C for 1/2 h, cooled to 60 °C and poured onto 2 Kg ice. Cautiously 500 ml of 50% aqueous NaOH was added. After 24 hours at room temperature the solid was filtered off, and 500 mL of saturated aqueous $Na_2SO_4$ was added. The resulting solid precipitate was collected, added to the previously filtered solid, and recrystallized from 2 L of $H_2O$. Yield 25 g after overnight vacuum drying at 50 °C. The location of the sulfo group was determined as being the 7-position by proton nuclear magnetic

resonance measurements.

Step B - Preparation of Anhydro-7-sulfo-3-(3-sulfobutyl)-1,1,2-trimethyl-1H-benz[e]indolinium Hydroxide (Intermediate B)

A mixture of 28 g of 7-sulfo-1,1,2-trimethyl-1H-benz[e]indole (Intermediate A) and 40 g of 2,4-butanesulfone was stirred and slowly heated to an internal temperature of 210 °C over a period of 1.5 h. The reaction mass was held at 210 °C for 20 minutes until a homogeneous brown liquid was obtained. After cooling to room temperature, the solidified mass was dissolved in 100 mL of boiling methanol. After cooling to room temperature, the solid that precipitated was collected by suction filtration. This solid was suspended in 500 mL of acetone with stirring. Filtration and drying at 0.5 mm Hg overnight gave 35 g (85%) of light gray solid. The infrared spectrum was in agreement with the expected structure.

Step C - Preparation of Dye 1

2.1 g of intermediate B of Example 1 and 1.3 g 1-[2,5-bis(anilinomethylene)cyclopentylidene]-4-ethoxycarbonylpiperazinium tetrafluoroborate were combined in 5 ml triethylamine and 20 ml dimethylformamide and heated at reflux for 5 minutes. After cooling, the mixture was diluted with ether with stirring. The ether phase was decanted and the remaining product was dissolved in a 50/50 mixture of methanol and water. Excess potassium acetate dissolved in methanol was added and the resulting precipitate was recrystallized from a 50/50 mix of methanol and water to yield Dye 5 of Table III. λ-max = 738 nm (MeOH), ϵ-max = 15.34 x $10^4$.

The dyes of formula (I) impart a desirable cool image tone to photographic elements in which they are incorporated. Image tone, and whether it is perceived as "cool" or "warm", depends on psycho-physical reactions of human observers. Image tones perceived as cool have a hue that appears more blue while image tones perceived as warm have a hue that appears more yellow. This relationship between the blueness or yellowness of the hue of an image can be quantified according to a relationship defined by the Commission Internationale de l'Eclairage. This formula, identified as the CIE 1976 (L*a*b*)-Space, defines a color space where the quantity L* defines the perceived lightness with greater values indicating lighter tone, the quantity a* defines hue along a green-red axis with negative values indicating more green hue and positive values indicating more red hue, and the quantity b* defines hue along a yellow-blue axis with negative values indicating more blue hue and positive values indicating more yellow hue.

The CIE 1976 (L*a*b*)-space is defined by the equations:

$$L^* = 116 (Y/Y_o)^{1/3} - 16$$
$$a^* = 500[(X/X_o)^{1/3} - (Y/Y_o)^{1/3}]$$
$$b^* = 200[(Y/Y_o)^{1/3} - (Z/Z_o)^{1/3}]$$

where $X_n$, $Y_n$, and $Z_n$ are the tristimulus values of the standard illuminant with $Y_n$ equal to 100. According to the formula, a desirable cool image tone would be signified by a blue hue, which would be indicated by more negative values for b*. A more detailed description of the CIE 1976 (L*a*b*)-space can be found in G. Wyszecki & W. S. Stiles, Color Science. Concepts and Methods, Quantitative Data and Formulae, J. Wiley & Sons, N.Y. (1982).

The dyes of formula (I) may be incorporated in any layer of a photographic element where it is desired to absorb infrared radiation. These include essentially any layer where it is known to use filter dyes, such as overcoat layers, undercoat layer, and interlayers. The dye may be advantageously used in elements having other blue dyes, either in the support or in layers thereon, to enhance the cool tone provided by those dyes. Such blue dyes are well-known in the art. The dyes may be in a layer separate from the radiation-sensitive layer(s) that is on the same side of the support as the radiation-sensitive layer or on a different side of the support as the radiation-sensitive layer. The dye may also be located in the radiation-sensitive layer as an absorber dye, but is preferably not be adsorbed to the silver halide. The dye is preferably located in a layer where it will be visible along with the image provided by the element, but the exact location of the layer containing the dye of formula (I) is not crucial, as the primary advantages of the dye, its infrared absorption and blue hue will be present regardless of its location.

The dye of formula (I) is advantageously used as a J-aggregate so it is preferably incorporated in a layer of the photographic element that is substantially free of any compound that would cause the dye to deaggregate, as the molecular absorption of the dyes is generally at too short a wavelength to be useful as infrared filter dyes unless they achieve a shift to a longer wavelength brought about by aggregation.

Aggregation also helps to immobilize the dye to prevent wandering.

The dye of formula (I) can be present in any amount that is known to be useful for filter dyes in photographic elements. The exact amount needed for the dye to be effective as a filter dye will vary depending on the specific characteristics of the photographic element, such as the speed and λ-max of the radiation-sensitive material, sensitizing dyes, supersensitizers, and the like, and specific levels of effective amounts of the dye would be well-known to one skilled in the art. The dye is preferably coated at a level of from 0.5 to 500 mg/$m^2$.

The radiation-sensitive layer(s) of the photographic element of the invention contain a radiation-sensitive component sensitized so as to be responsive to infrared radiation. This radiation-sensitive component is preferably silver halide, such as silver chloride, silver bromide, silver chlorobromide, silver iodide, silver bromoiodide, silver chlorobromoiodide, and the like. Silver halide emulsions and their preparation are well-known in the art and do not require further description herein. Silver halide emulsions and their preparation are further described in in Research Disclosure, Item 17643, December, 1978 [hereinafter, Research Disclosure I], Section I; Research Disclosure, Item 18431, August, 1979 [hereinafter, Research Disclosure II], Section I; and Research Disclosure, Item 22534, January, 1983, and the references cited therein, as well as U.S. Patent 4,425,426.

While silver halide is the preferred radiation-sensitive material for use in the present invention, the element may utilize other radiation-sensitive materials known in the art, such as diazo image-forming systems, light-sensitive tellurium-containing compounds, light-sensitive cobalt-containing compounds, and others described in, for example, J. Kosar, Light-Sensitive Systems: Chemistry and Application of Nonsilver Halide Photographic Processes, J. Wiley & Sons, N.Y. (1965).

The radiation-sensitive material described above can be sensitized to infrared by techniques known in the art. Sensitization of silver halide can be accomplished with chemical sensitizers such as gold compounds, iridium compounds, or other group VIII metal compounds, or with spectral sensitizing dyes such as cyanine dyes, merocyanine dyes, styryls, or other known spectral sensitizers. Additional information on sensitization of silver halide is described in Research Disclosure I, Sections I-IV and Research Disclosure II, Sections I and X.

The layer of the photographic element of the invention containing the dye of formula (I) and/or the radiation-sensitive material also comprises a vehicle. Such vehicles are well-known in the art and are described, for example, Research Disclosure I, Section IX. These include hydrophilic colloids such as gelatin (e.g., cattle bone gelatin, pigskin gelatin), gelatin derivatives (e.g., phthalated gelatin, acetylated gelatin), polysaccharides (e.g., dextran); synthetic polymers such as polyvinyl alcohol, acrylamide polymers, polymers of alkyl and sulfoalkyl acrylates and methacrylates, hydrolyzed polyvinyl acetates, and polyamides, to name a few. Although the dye of formula (I) is generally immobile in the J-aggregated state, it may be desirable, in certain instances, to use the dye in combination with a mordant, such as polyvinylimidazole or polyvinylpyridine, to aid in immobilizing the dye. The technology of mordanting dyes is well-known in the art, and is described in further detail in U.S. Patents 3,282,699, 3,455,693, and 3,438,779.

The layers of the element may be hardened, as is known in the art. Hardeners are described in Research Disclosure I, Section X. Typical hardening compounds include formaldehyde, vinyl sulfones, carbamoyl pyridiniums, and formamidiniums.

The dye of formula (I) is generally added to a water, solvent, or mixture thereof solution or melt of the vehicle to form a coating composition. The coating composition may also contain a coating aid as is known in the art and described in Research Disclosure I, Section XI. This composition is then coated as a layer on a support of the photographic element of the invention.

The support of the element of the invention can be any of a number of well-known supports for photographic elements. These include polymeric films such as cellulose esters (e.g., cellulose triacetate and diacetate) and polyesters of dibasic aromatic carboxylic acids with divalent alcohols (e.g., poly(ethylene terephthalate)), paper, and polymer-coated paper. Such supports are described in further detail in Research Disclosure I, Section XVII and Research Disclosure II, Section XII.

The element of the invention can also include any of a number of other well-known additives and layers, as described in Research Disclosures I and II. These include, for example, optical brighteners, antifoggants, emulsion stabilizers, image stabilizers, light-absorbing materials such as filter layers or intergrain absorbers, light-scattering materials, gelatin hardeners, coating aids and various surfactants, overcoat layers, interlayers and barrier layers, antistatic layers, plasticizers and lubricants, matting agents, development inhibitor-releasing couplers, bleach accelerator-releasing couplers, and other additives and layers known in the art.

The photographic elements of the invention, when exposed, can be processed to yield an image. After processing, the dye of formula (I) will generally impart to the image a blue hue characteristic of a cool

image tone. This hue will generally be characterized by a b* value of 0 or less. In other words, the dye in the element, if it could be observed by itself in the absence of any other hue-imparting components in the element, such as other dyes or the silver image itself, would have a b* value of 0 or less. The actual observed hue of the dye will, of course, also depend on the a* value too. Large a* values toward green or red may make the hue of the dye appear less blue; however, for any given a* value, dyes having smaller b* values as do the dyes of formula (I) will have a "bluer" hue and a cooler image tone than dyes with higher b* values.

Processing of the photographic element of the invention can be by any type of known photographic processing, as described in Research Disclosure I, Sections XIX-XXIV. A negative image can be developed by color development with a chromogenic developing agent followed by bleaching and fixing. A positive image can be developed by first developing with a non-chromogenic developer, then uniformly fogging the element, and then developing with a chromogenic developer. If the material does not contain a color-forming coupler compound, dye images can be produced by incorporating a coupler in the developer solutions.

Bleaching and fixing can be performed with any of the materials known to be used for that purpose. Bleach baths generally comprise an aqueous solution of an oxidizing agent such as water soluble salts and complexes of iron (III) (e.g., potassium ferricyanide, ferric chloride, ammonium of potassium salts of ferric ethylenediaminetetraacetic acid), water-soluble persulfates (e.g., potassium, sodium, or ammonium persulfate), water-soluble dichromates (e.g., potassium, sodium, and lithium dichromate), and the like. Fixing baths generally comprise an aqueous solution of compounds that form soluble salts with silver ions, such as sodium thiosulfate, ammonium thiosulfate, potassium thiocyanate, sodium thiocyanate, thiourea, and the like.

The invention is further illustrated by the following Examples:

Example 1

A photographic element was prepared according to the following format:

| | |
|---|---|
| gelatin | (0.77 $g/m^2$) |
| bis(vinyl sulfonyl methyl ether) | (2.5% based on total gel) |
| 0.26 µm infrared-sensitized $AgBr_{98.3}I_{1.7}$ | (2.25 $g/m^2$) |
| gelatin | (2.45 $g/m^2$) |
| support | |
| gelatin | (3.01 $g/m^2$) |
| filter dye 1 or comparison dye A | (54 $mg/m^2$) |
| gelatin | (0.77 $g/m^2$) |
| bis(vinyl sulfonyl methyl ether) | (2.5% based on total gel) |

Comparison dye A:

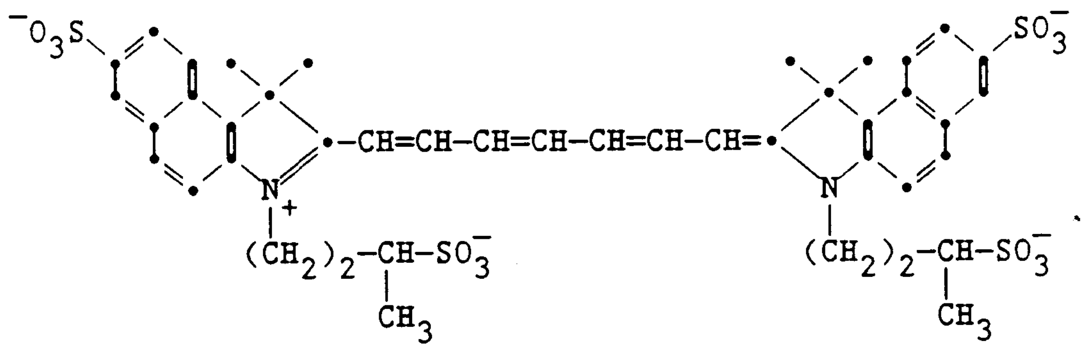

The elements were exposed to a test pattern image with infrared radiation and processed with a hydroquinone developer in a rapid access process, such as illustrated in Barnes et al U.S. Patent 3,545,971. No halation was observed in the image in either element, indicating that effective antihalation protection was provided by both dye 1 and comparison dye A.

The blue hue (b*) of the images at a density of 1.2 was determined according to the CIE (L*a*b*) method using a standard CIE Source B illumination source. The b* for the element of the invention with dye 1 was -6.6 compared to -5.0 for the comparison element with dye A. This indicates a significantly bluer hue for the element of the invention.

Examples 2-13

Elements were prepared according to the following format:

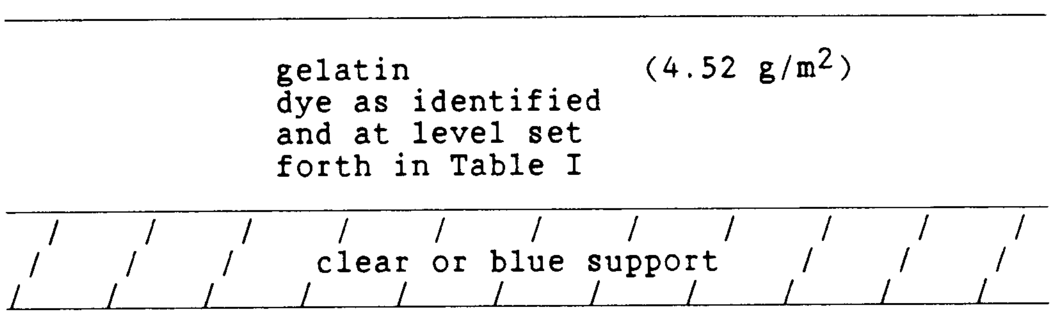


The elements were processed as in Example 1. The absorption of the dye was measured before and after processing. The value for b* using a standard CIE source B light source was determined for some of the processed elements. The results are presented in Table 1.

TABLE I

| Dye | Level (millimol/ft$^2$) | Support | Dye λ-max (nm)[1] | Dye λ-sec (nm)[1] | Density at λ-max (nm)[1] | a*[2] | b*[2] | Comments |
|---|---|---|---|---|---|---|---|---|
| None (Control) | | clear | | | | −0.21 | +0.89 | |
| 1 | 0.0025 | clear | 815 | — | 0.52 | −1.81 | −0.47 | |
| 2 | 0.0025 | clear | 806 | — | 0.45 | −1.49 | −0.22 | |
| 3 | 0.0025 | clear | 887 | 680 | — | — | — | |
| A (Comparison) | 0.0025 | clear | >900 | 802 | 0.25 | −0.85 | +1.85 | yellowish green hue |
| 1 | 0.0050 | clear | 815 | — | 0.98 | −3.67 | −2.27 | |
| 2 | 0.0050 | clear | 806 | — | 1.41 | −4.97 | −3.38 | |
| 3 | 0.0050 | clear | 887 | 680 | 0.98 | −2.36 | −1.82 | |
| A (Comparison) | 0.0050 | clear | >900 | 802 | 0.37 | −1.87 | +2.77 | yellowish green hue |
| None (Control) | | blue | | | | −6.23 | −13.44 | |
| 1 | 0.0025 | blue | 815 | — | 0.45 | −7.63 | −14.56 | |
| 2 | 0.0025 | blue | 806 | — | 0.41 | −7.18 | −13.93 | |
| 3 | 0.0025 | blue | 887 | 680 | 0.32 | −6.79 | −13.74 | |
| A (Comparison) | 0.0025 | blue | >900 | 802 | 0.18 | −6.80 | −12.21 | warmer tone than blue support alone |

TABLE I - Cont'd

| Dye | Level (millimol/ $ft^2$) | Support | Dye λ-max (nm)[1] | Dye λ-sec (nm)[1] | Density at λ-max (nm)[1] | a*[2] | b*[2] | Comments |
|---|---|---|---|---|---|---|---|---|
| 1 | 0.0050 | blue | 815 | — | 0.78 | -9.01 | -15.85 | |
| 2 | 0.0050 | blue | 806 | — | 0.66 | -8.05 | -14.81 | |
| 3 | 0.0050 | blue | 887 | 680 | 0.61 | -7.22 | -14.35 | |
| A (Comparison) | 0.0050 | blue | >900 | 802 | 0.24 | -7.54 | -11.73 | warmer tone than blue support alone |

1 Before processing
2 After processing

The results in Table I show that the dyes of the invention absorb radiation in the infrared region and also have a desirable blue hue.

## Claims

1. A photographic element comprising a support having thereon an infrared radiation-sensitive layer and a filter dye layer, which is the same as or different from the infrared radiation-sensitive layer, characterized in that the filter dye layer comprises a dye having the formula:

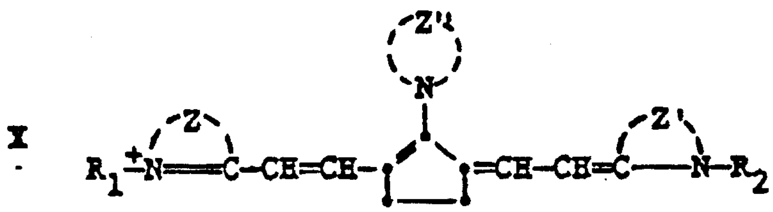

wherein Z and Z' each independently represent the atoms necessary to complete a substituted or unsubstituted benzothiazole nucleus, benzoselenazole nucleus, indole nucleus, naphthothiazole nucleus, naphthoselenazole nucleus, or benzindole nucleus,

$R_1$ and $R_2$ each independently represents alkyl of from 1 to 8 carbon atoms or sulfoalkyl, carboxyalkyl, or sulfatoalkyl of from 2 to 6 carbon atoms,

with the proviso that when Z and Z' are sulfo-substituted benzindole nuclei, $R_1$ and $R_2$ have at least 3 linear carbon atoms between the heterocyclic nitrogen atom and the sulfo or sulfato group if $R_1$ and $R_2$ are sulfoalkyl or sulfatoalkyl, or at least 2 linear carbon atoms between the heterocyclic nitrogen atom and the carboxy group if $R_1$ and $R_2$ are carboxyalkyl,

Z'' represents the atoms necessary to complete a substituted or unsubstituted piperidyl ring, a substituted or unsubstituted pyrrolidyl ring, and substituted or unsubstituted pyrazinyl ring, and

X represents a counterion.

wherein the layer comprising the dye is free of any compound that would deaggregate the dye, and the dye is not absorbed to silver halide.

2. A photographic element according to Claim 1 wherein the dye is in the radiation-sensitive layer.

3. A photographic element according to Claim 1 wherein the dye is in a layer other than the radiation-sensitive layer.

4. A photographic element according to Claim 3 wherein the dye-containing layer is located on the side of the support opposite from the radiation-sensitive layer.

5. A photographic element according to Claim 3 wherein the dye-containing layer is located between the support and the radiation-sensitive layer.

6. A photographic element according to Claims 1-5 wherein the radiation-sensitive layer is a silver halide emulsion layer

7. A photographic element according to Claims 1-6 wherein the filter dye layer comprises from 0.5 to 500 $mg/m^2$ of said dye.

8. A photographic element according to Claims 1-7 wherein the support or a layer of the element comprises another filter dye that is a blue dye resistant to removal on processing.

9. A photographic element according to Claims 1-8 wherein

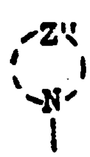

is represented by the formula:

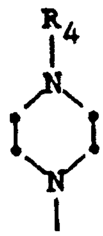

wherein $R_4$ is selected from the group consisting of

$-CO_2R_5$, 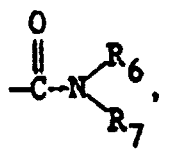, and 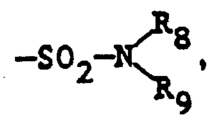,

wherein $R_5$, $R_6$, $R_7$, $R_8$, and $R_9$ are each independently alkyl of from 1 to 4 carbon atoms.

**10.** A photographic element according to Claims 1-9 wherein the dye is selected from the group consisting of:

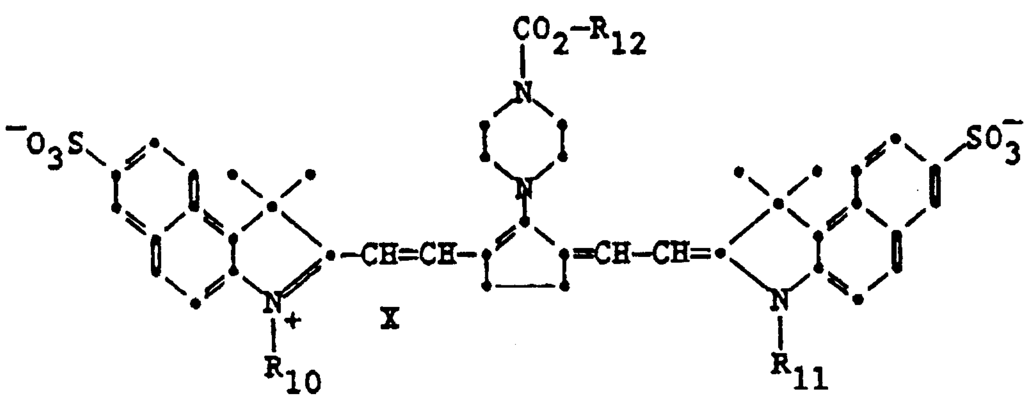

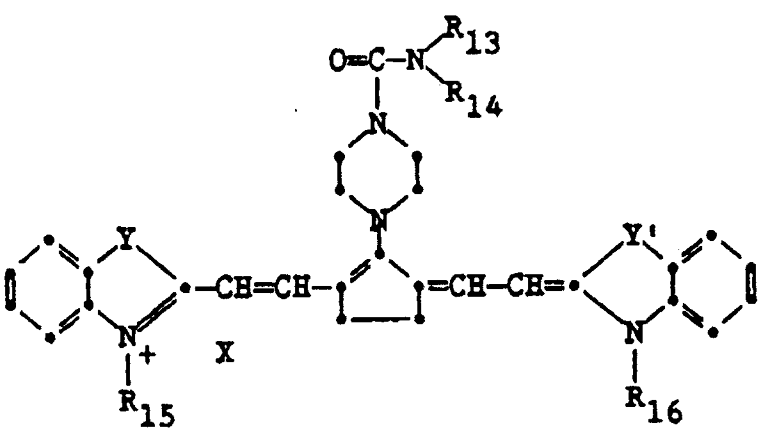

and

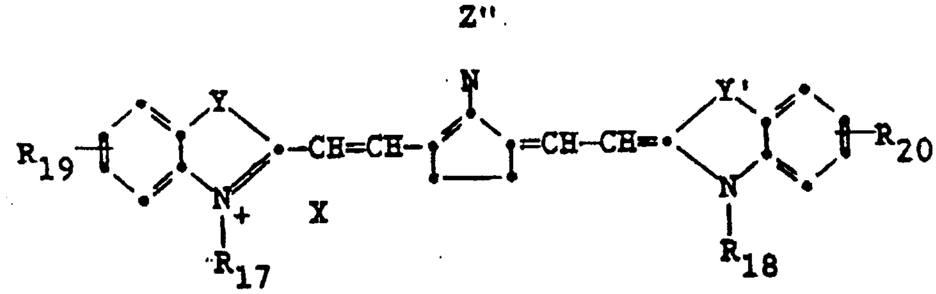

wherein $R_{10}$ and $R_{11}$ each independently represents alkyl of from 1 to 6 carbon atoms or sulfoalkyl of from 3 to 6 carbon atoms having 3 linear carbon atoms in the chain between the heterocyclic nitrogen and the sulfo group,

$R_{12}$, $R_{13}$, and $R_{14}$ each independently represents alkyl of from 1 to 4 carbon atoms,

$R_{15}$, $R_{16}$, $R_{17}$ and $R_{18}$ each independently sulfoalkyl of from 3 to 6 carbon atoms having 3 linear carbon atoms in the chain between the heterocyclic nitrogen and the sulfo group,

$R_{19}$ and $R_{20}$ each independently represents H or 5,6-benzo,

Z" represents the atoms necessary to complete a piperidyl or a pyrrolidyl ring structure,

Y and Y' each independently represents S or Se,

and

X represents a counterion.

**Patentansprüche**

1. Photographisches Element mit einem Träger, auf dem sich eine für infrarote Strahlung empfindliche Schicht sowie eine Filterfarbstoffschicht, die die gleiche ist wie die für infrarote Strahlung empfindliche Schicht oder verschieden ist von der für infrarote Strahlung empfindlichen Schicht, befinden, dadurch gekennzeichnet, daß die Filterschicht einen Farbstoff der Formel:

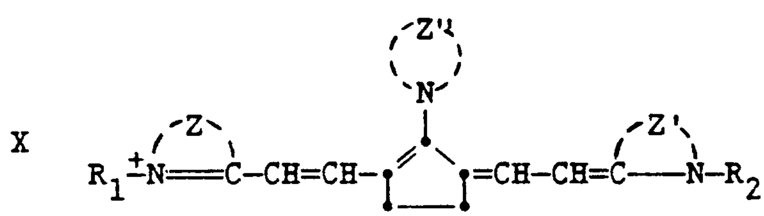

aufweist, worin bedeuten: Z und Z' jeweils unabhängig voneinander die Atome, die zur Vervollständigung eines substituierten oder unsubstituierten Benzothiazolkernes, Benzoselenazolkernes, Indolkernes, Naphthothiazolkernes, Naphthoselenazolkernes oder Benzindolkernes erforderlich sind,
$R_1$ und $R_2$ jeweils unabhängig voneinander Alkylgruppen mit 1 bis 8 Kohlenstoffatomen oder Sulfoalkyl-, Carboxyalkyl- oder Sulfatoalkylgruppen mit 2 bis 6 Kohlenstoffatomen,
wobei gilt, daß, wenn Z und Z' Sulfo-substituierte Benzindolkerne bilden, $R_1$ und $R_2$ mindestens drei lineare Kohlenstoffatome zwischen dem heterocyclischen Stickstoffatom und der Sulfo- oder Sulfatogruppe aufweisen, wenn $R_1$ und $R_2$ Sulfoalkyl- oder Sulfatoalkylgruppen sind oder mindestens zwei lineare Kohlenstoffatome zwischen dem heterocyclischen Stickstoffatom und der Carboxygruppe, wenn $R_1$ und $R_2$ Carboxyalkylgruppen sind,
Z" die Atome, die zur Vervollständigung eines substituierten oder unsubstituierten Piperidylringes, eines substituierten oder unsubstituierten Pyrrolidylringes und eines substituierten oder unsubstituierten Pyrazinylringes erforderlich sind, und
X ein Gegenion.
wobei die Schicht mit dem Farbstoff frei von jeglicher Verbindung ist, die den Farbstoff deaggregieren würde und daß der Farbstoff nicht an dem Silberhalogenid absorbiert ist.

2. Photographisches Element nach Anspruch 1, in dem sich der Farbstoff in der strahlungsempfindlichen Schicht befindet.

3. Photographisches Element nach Anspruch 1, in dem sich der Farbstoff in einer von der strahlungsempfindlichen Schicht verschiedenen Schicht befindet.

4. Photographisches Element nach Anspruch 3, in dem sich die Farbstoff enthaltende Schicht auf der Seite des Trägers befindet, die der strahlungsempfindlichen Schicht gegenüberliegt.

5. Photographisches Element nach Anspruch 3, in dem die Farbstoff enthaltende Schicht zwischen dem Träger und der strahlungsempfindlichen Schicht angeordnet ist.

6. Photographisches Element nach Ansprüchen 1 bis 5, in dem die strahlungsempfindliche Schicht eine Silberhalogenidemulsionsschicht ist.

7. Photographisches Element nach Ansprüchen 1 bis 6, in dem die Filterfarbstoffschicht 0,5 bis 500 mg/m$^2$ des Farbstoffes enthält.

8. Photographisches Element nach Ansprüchen 1 bis 7, in dem der Träger oder eine Schicht des Elementes einen anderen Filterfarbstoff aufweist, der ein blauer Farbstoff ist, der einer Entfernung bei der Entwicklung des Elementes zu widerstehen vermag.

9. Photographisches Element nach Ansprüchen 1 bis 8, in dem

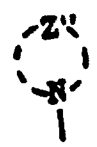

dargestellt wird durch die Formel:

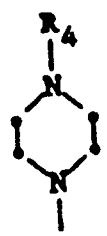

worin $R_4$ ausgewählt ist der Gruppe bestehend aus:

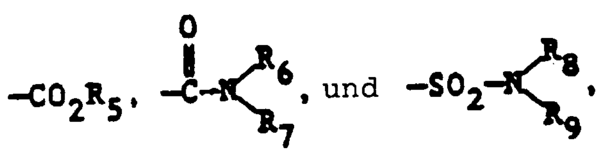

, und ,

worin $R_5$, $R_6$, $R_7$, $R_8$ und $R_9$ jeweils unabhängig voneinander für Alkylgruppen mit 1 bis 4 Kohlenstoffatomen stehen.

10. Photographisches Element nach Ansprüchen 1 bis 9, in dem der Farbstoff ausgewählt ist aus der Gruppe bestehend aus:

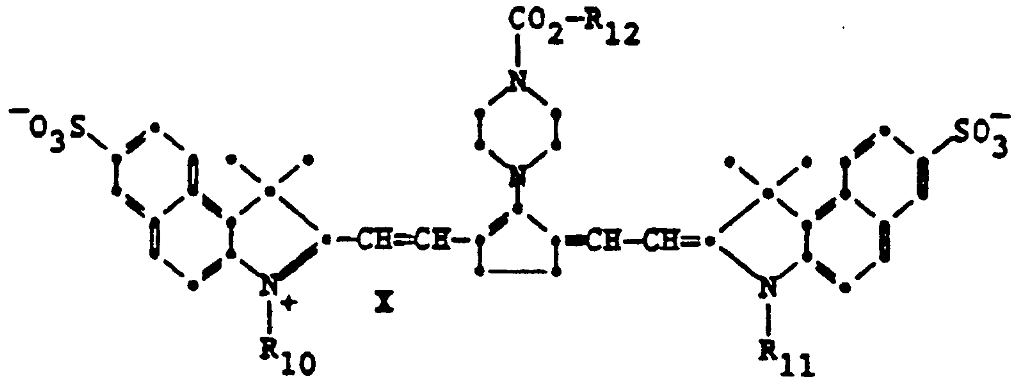

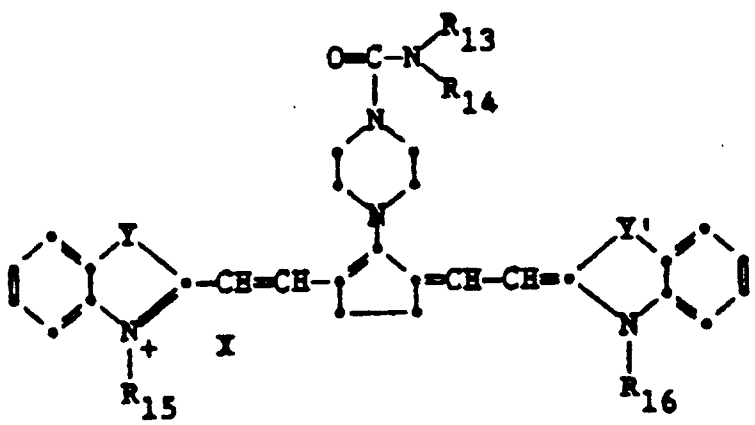

und

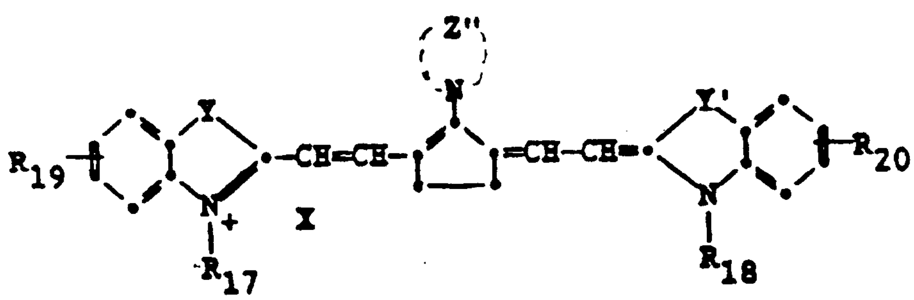

worin $R_{10}$ und $R_{11}$ jeweils unabhängig voneinander Alkylgruppen mit 1 bis 6 Kohlenstoffatomen darstellen oder Sulfoalkylgruppen mit 3 bis 6 Kohlenstoffatomen mit 3 linearen Kohlenstoffatomen in der Kette zwischen dem heterocyclischen Stickstoff und der Sulfogruppe,
$R_{12}$, $R_{13}$ und $R_{14}$ jeweils unabhängig voneinander Alkylgruppen mit 1 bis 4 Kohlenstoffatomen,
$R_{15}$, $R_{16}$, $R_{17}$ und $R_{18}$ jeweils unabhängig voneinander Sulfoalkylgruppen mit 3 bis 6 Kohlenstoffatomen mit 3 linearen Kohlenstoffatomen in der Kette zwischen dem heterocyclischen Stickstoff und der Sulfogruppe,
$R_{19}$ und $R_{20}$ jeweils unabhängig voneinander H oder eine 5,6-Benzogruppe,
Z" die Atome, die zur Vervollständigung einer Piperidyl- oder einer Pyrrolidylringstruktur erforderlich sind,
Y und Y' jeweils unabhängig voneinander S oder Se, und
X ein Gegenion.

## Revendications

1. Produit photographique comprenant un support recouvert d'une couche sensible au rayonnement infrarouge et une couche de colorant filtre, qui est la même ou différente de la couche sensible au rayonnement infrarouge, caractérisé en ce que la couche de colorant filtre comprend un colorant de formule :

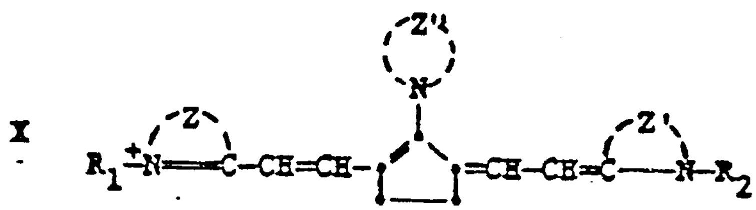

où Z et Z' chacun séparément représentent les atomes nécessaires pour compléter un noyau benzotriazole substitué ou non, benzosélénazole, indole, naphtothiazole, naphtosélénazole ou benzindole,

$R_1$ et $R_2$ chacun séparément représentent un alkyle de 1 à 8 atomes de carbone ou sulfoalkyle, carboxyalkyle, ou sulfatoalkyle de 2 à 6 atomes de carbone,

avec la condition que lorsque Z et Z' sont des noyaux benzindole substitués par un groupe sulfo, $R_1$ et $R_2$ ont au moins 3 atomes de carbone linéaires entre l'atome d'azote de l'hétérocycle et le groupe sulfo ou sulfato si $R_1$ et $R_2$ sont sulfoalkyle ou sulfatoalkyle, ou au moins 2 atomes de carbone linéaires entre l'azote de l'hétérocycle et le groupe carboxy si $R_1$ et $R_2$ sont carboxyalkyle,

Z" représente les atomes nécessaires pour compléter un cycle pipéridyle substitué ou non, pyrrolidyle substitué ou non, et pyrazinyle substitué ou non, et

X représente un ion pour équilibrer la charge,

dans lequel la couche comprenant le colorant ne contient aucun composé susceptible de désagréger le colorant, et le colorant n'est pas absorbé par les halogénures d'argent.

2. Produit photographique selon la revendication 1 dans lequel le colorant est dans une couche sensible au rayonnement.

3. Produit photographique selon la revendication 1 dans lequel le colorant est dans une couche autre que la couche sensible au rayonnement.

4. Produit photographique selon la revendication 3 dans lequel la couche contenant le colorant est placée du côté du support opposé à la couche sensible au rayonnement.

5. Produit photographique selon la revendication 3 dans lequel la couche contenant le colorant est placée entre le support et la couche sensible au rayonnement.

6. Produit photographique selon les revendications 1 à 5 dans lequel la couche sensible au rayonnement est une couche d'émulsion aux halogénures d'argent.

7. Produit photographique selon les revendications 1 à 6 dans lequel la couche de colorant filtre comprend de 0,5 à 500 mg/m2 de colorant.

8. Produit photographique selon les revendications 1 à 7 dans lequel le support ou une couche de l'élément comprend un autre colorant filtre qui est un colorant bleu qui ne s'élimine pas au traitement.

9. Produit photographique selon les revendications 1 à 8 dans lequel

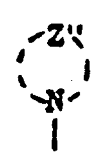

est représenté par la formule :

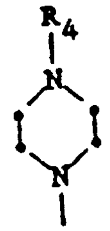

où $R_4$ est choisi dans le groupe comprenant

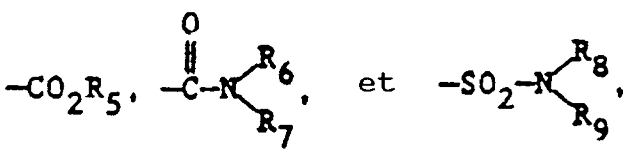

et

où $R_5$, $R_6$, $R_7$, $R_8$ et $R_9$ chacun séparément sont alkyle de 1 à 4 atomes de carbone.

**10.** Produit photographique selon l'une quelconque des revendications 1 à 9 dans lequel le colorant est choisi dans le groupe comprenant :

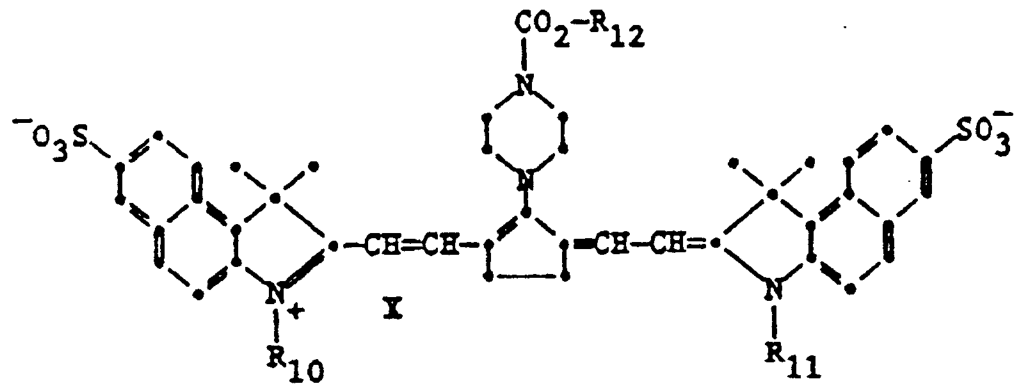

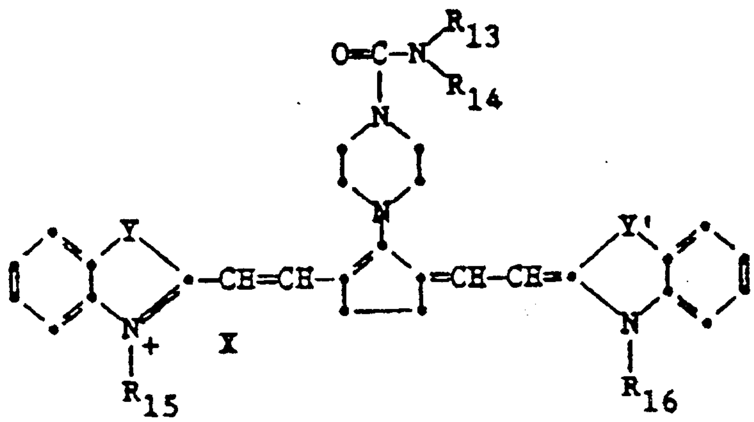

et

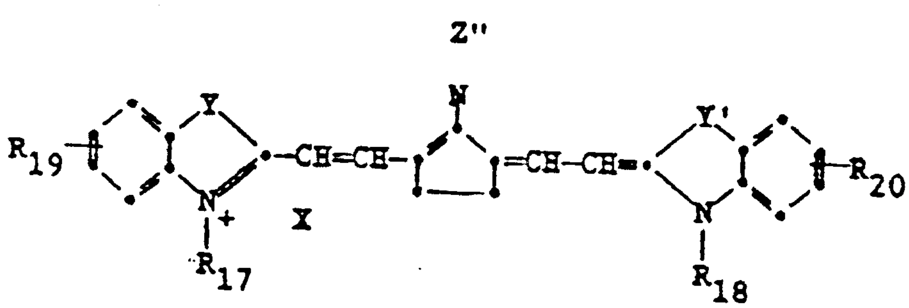

où

$R_{10}$ et $R_{11}$ chacun séparément représentent alkyle de 1 à 6 atomes de carbone ou sulfoalkyle de 3 à 6 atomes de carbone ayant 3 atomes de carbone linéaires dans la chaîne entre l'azote hétérocyclique et le groupe sulfo,

$R_{12}$, $R_{13}$ et $R_{14}$ chacun séparément représentent alkyle de 1 à 4 atomes de carbone,

$R_{15}$, $R_{16}$, $R_{17}$ et $R_{18}$ chacun séparément représentent sulfoalkyle de 3 à 6 atomes de carbone ayant 3 atomes de carbone linéaires dans la chaîne entre l'azote hétérocyclique et le groupe sulfo,

$R_{19}$ et $R_{20}$ chacun séparément représentent H ou 5,6-benzo,

Z' représente les atomes nécessaires pour compléter un cycle pipéridyle ou pyrrolidyle,

Y et Y' chacun séparément représentent S ou Se, et

X représente un ion équilibrant la charge.